Europäisches Patentamt

European Patent Office

Office européen des brevets

(11) Publication number: **0 122 545**
**B1**

(12) **EUROPEAN PATENT SPECIFICATION**

(45) Date of publication of patent specification: **20.12.89**

(21) Application number: **84103759.1**

(22) Date of filing: **05.04.84**

(51) Int. Cl.⁴: **B 60 J 1/00**

(54) **Method for intimately connecting and sealing a glass pane to a mouldable polymeric material structure, and the product obtained thereby.**

(30) Priority: **18.04.83 IT 6741883**

(43) Date of publication of application:
**24.10.84 Bulletin 84/43**

(45) Publication of the grant of the patent:
**20.12.89 Bulletin 89/51**

(84) Designated Contracting States:
**BE DE FR GB NL**

(56) References cited:
**DE-A-2 825 411**
**GB-A-2 132 130**

(73) Proprietor: **FIAT AUTO S.p.A.**
**Corso Giovanni Agnelli 200**
**I-10135 Torino (IT)**

(72) Inventor: **Tavella, Corrado**
**Via Delleani 1**
**10026 Santena (IT)**
Inventor: **Noris, Claudio**
**Corso G. Ferraris 137**
**10128 Torino (IT)**

(74) Representative: **Jacobacci, Guido et al**
**Jacobacci-Casetta & Perani S.n.c. Via Alfieri 17**
**I-10121 Torino (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a method for intimately connecting and sealing a glass pane provided with a peripheral rubber insert to a mouldable polymeric material structure by incorporating by co-moulding and at least in part, the insert, into the frame of the polymeric material load-bearing structure, said structure being moulded in a mould limited at least to the contour of the insert intended for incorporation to the polymeric material, and the product obtained thereby (see e.g. DE—A—2 825 411).

It is known that a current trend in the manufacture of motor vehicle car bodies favours the use of polymeric materials in lieu of sheet metal.

Polymeric materials are generally employed to fabricate such movable non-supporting parts of a car body as bonnet covers, doors, etc.

In the actual fabrication of such car body elements, problems arise in carrying out a sealed connection between fixed glass panes and the frame portions provided by respective load bearing structures.

In fact, the use for this purpose of ordinary elastomeric gaskets is discouraged both by the difficulty of forming on a moulded structure the thin blade-like frame edges which are required for gripping the gaskets thereon, and the excessive deformability of such frame edges resulting in the gasket being easily disengaged therefrom and the glass pane becoming dislodged.

Likewise, mere cementing of the glass pane to the structure with the interposition of an adhesive, even where this can provide an adequately strong bond and seal, involves costly and elaborate manual processing of the glass pane, quite unsuitable for mass production techniques, and the end results are aesthetically unsatisfactory.

This invention sets out essentially to obviate such drawbacks. In particular, an important object of this invention is to provide a method whereby it becomes possible, with simple operations meeting the requirements of mass production techniques, to achieve a reliable water- and air-tight rigid connection of the glass pane to the polymeric material load bearing structure, while a high aesthetic quality final product is afforded.

Another important object of this invention is to provide a method whereby a connection can be achieved between the glass pane and load bearing structure which has such characteristics of mechanical cohesion as to ensure substantial participation of the glass pane material in the forming of the structure rigidity, with attendant significant simplification of the stress-resistant shaped section members of the structure, savings in materials, and reduction in the final product weight.

In achieving these and other objects, such as will be apparent from ensuing description, this invention starts from the teachings of the co-applicant's prior British patent application No. 83/27878 filed on October 18, 1983 under the priority date of October 20th, 1982 and published on July 4th, 1984 under GB—A—2 132 130. This prior application discloses a method for bond or adhesion moulding rubber on a glass pane whereby a chemical-molecular bond or adhesion of rubber to glass is achieved during the dimensional formation of the rubber concurrent transformation from the plastic phase to the elastic phase produced under the effects of time, temperature and/or pressure.

Starting from the teachings of said prior bonding or adhesion method, this invention provides a further method for intimately connecting and sealing a glass pane provided with a peripheral rubber insert to a mouldable polymeric material structure by incorporating by co-moulding and at least in part, the insert, into the frame of the polymeric material load-bearing structure, said structure being moulded in a mould limited at least to the contour of the insert intended for incorporation to the polymeric material, as disclosed e.g. in DE—A—2 825 411, characterized in that it comprises, in succession, the following processing steps:

providing the glass pane with a peripheral rubber inset adhesion bonded thereto by chemical-molecular adhesion during the dimensional moulding conformation stage of the rubber;

providing on said adhesion bonded insert, during the dimensional conformation stage thereof, one or more, continuous or non-continuous, section member profiles effective to allow the later applied polymeric material to be gripped thereon; and carrying out said co-moulding, incorporating operation.

The product manufactured according to the inventive method comprises a generic structure of a mouldable polymeric material, in particular a motor vehicle door, having a port closed by a glass pane, wherein the glass pane holding and mounting frame border surrounding said port incorporates a rubber insert previously adhesion bonded to a corresponding peripheral portion of said glass pane, and wherein for gripping purposes the adhesion bonded insert rubber has section member profiles in which the resin of the structure spreads during the moulding step by co-penetrating said profiles in interlocked relationship.

Further embodiments of the invention are set out in the dependent claims.

Further features, objects and advantages of the invention will be apparent from the following detailed description, to be read in conjunction with the accompanying illustrative drawings, where:

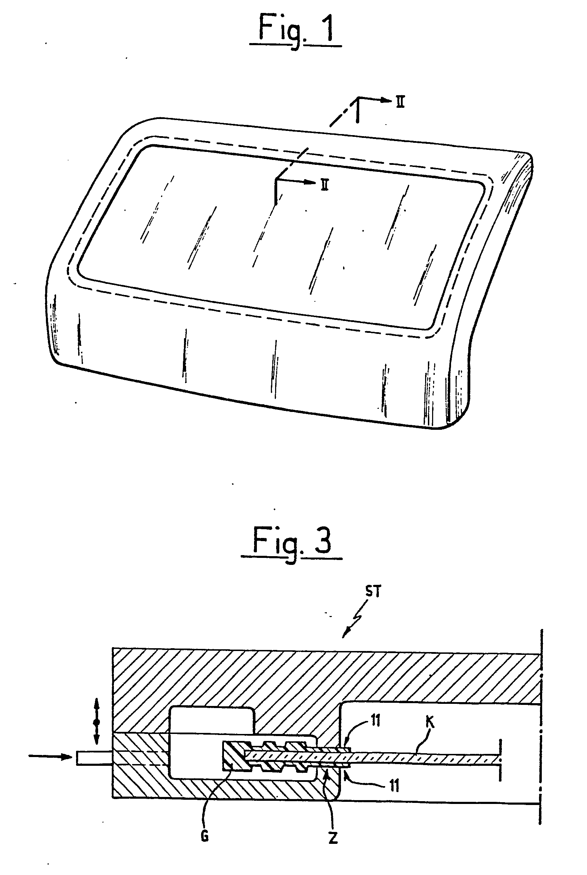

Figure 1 is a perspective view of a passenger car rear door having a fixed glass pane bonded to the door structure according to the bonding method of this invention;

Figure 2 is an enlarged sectional view taken along the line II—II of Figure 1, showing the connection area of the glass pane to the door structure as obtained in accordance with the inventive method;

Figures 2a to 2e are enlarged sectional views, similar to Figure 2, but showing respective modified embodiments of the connection; and

Figure 3 is a fragmentary, schematical sectional view taken through a mould for implementing the method of this invention.

In the drawing views, K denotes the glass pane, SR the load bearing structure of a mouldable polymeric material, such as a thermoplastic material reinforced with various fillers, and G a rubber insert surrounding the periphery of the glass pane continuously.

The insert G has been previously mounted around the glass pane with a method of adhesion bond moulding as disclosed in the cited British prior patent application GB—A—2 132 130, and consisting of producing the chemical-molecular bond of rubber to glass during the dimensional conformation (moulding) of the rubber and concurrent transformation from the plastic phase to the elastic phase.

To this aim, the glass pane is previously degreased, a primer is then applied followed by an adhesive, over the area intended for application of the rubber, and the moulding is carried out of the elastomeric compound, all as described in one of the examples given in the cited prior patent application.

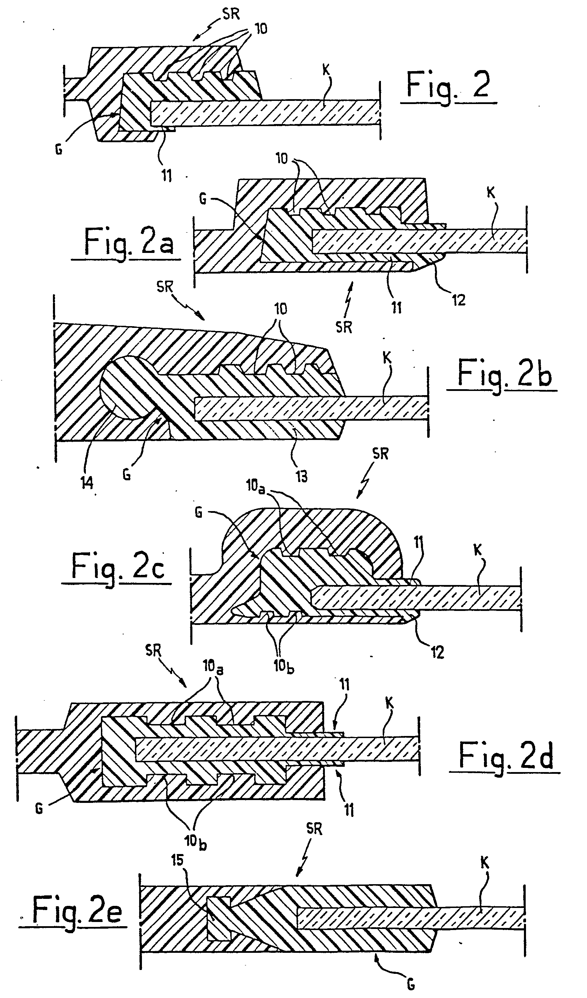

According to this invention, during the moulding step, the rubber insert G is contoured, for example as shown in Figure 2 where it is seen that it is provided for gripping purposes with a plurality of section member profiles 10 in the form of continuous channels having a trapezoidal cross-sectional configuration. The opposite side of the insert is formed with a lip 11 adapted to define a sealing frame border in full view.

A variety of gripping profiles for the insert are shown, by way of example, in the subsequent Figures 2a to 2e. In Figure 2a, the lip 11 widens out at the outside of the glass pane and is terminated in an inclined plane type transition frame border 12. In Figure 2b, the insert has a U-like shape and a lip 13 to be left in full view, as explained herein below. The insert, moreover, has a continuous bead 14 adapted to react to tensive stresses in the plane of the glass pane K. Figures 2c and 2d show inserts G having grip profiles 10a—10b on either faces, as well as lips and frames, such as 11 and 12, to be left in full view. Figure 2e shows an in-view insert having a grip element formed by a single continuous rib 15 of substantially T-like shape.

After mould removal, the glass pane K with the respective insert G provided with the grip profiles carried out with any of the shapes shown, or other equivalent ones as dictated by individual applicational requirements, are positioned into a mould ST for forming the load bearing structure SR. This mould is configured—as shown in Figure 3—to make a seal over the region Z onto the lip portion 11 of the insert to be left exposed to the outside, and to enclose internally that portion of the insert G which is to be incorporated by co-moulding into the material of the load bearing structure.

Upon closing the mould, the structure forming resin, e.g. a thermoplastic resin including optional reinforcing fillers, is injected according to any suitable conventional method. Upon mould removal, a finished product is obtained in which the frame border which encircles the glass pane filled port incorporates the insert G firmly held in the resin of the load bearing structure, which resin has spread during the plastic moulding stage into the grip profiles 10 provided in the insert and co-penetrating them to establish an interlocked relationship. The resulting mechanical bond affords a substantial contribution by the glass pane to the rigidity of the final structure, while providing a stable, reliable, and perfectly tight connection.

It will be apparent, moreover, how on account of the method used for moulding the frame border, this will appear after mould removal free of any surface unevenness, which makes the use of capping trims unnecessary and imparts to the manufactured article high quality aesthetic characteristics. Further, the preliminary formation of the insert G along the peripheral area of the glass pane avoids expensive and critical glass grinding operations, and makes handling and storage of the glass pane easier.

While the mechanical cooperation of the resin of the structure SR and rubber insert G is in itself adequate to provide the aforesaid mechanical strength features, the invention also provides for a chemical and physical adhesion bond between said resin and rubber during the resin moulding step. According to a further embodiment of the invention, this is accomplished by treating the insert G prior to the co-moulding step thereof, with a primer and/or adhesive which is compatible with the polymers present both in the resin and rubber. The nature of said primer and adhesive will, therefore, vary according to the nature of the elastomeric mixture or compound used for forming the insert G and composition of the resin forming the load bearing structure.

**Claims**

1. A method for intimately connecting and sealing a glass pane (K) provided with a peripheral rubber insert (G) to a mouldable polymeric material structure (SR) by incorporating by co-moulding and at least in part, the insert (G) into the frame of the polymeric material load-bearing structure (SR), said structure (SR) being moulded in a mould (ST) limited at least to the contour of the insert (G) intended for incorporation to the polymeric material, characterized in that it comprises, in succession, the following processing steps:

adhesion-bonding the peripheral rubber insert (G) to the glass pane (K) by chemical-molecular adhesion during the dimensional moulding conformation stage of the rubber;

providing on said adhesion-bonded insert (G), during the dimensional conformation stage thereof, one or more, continuous or non-continuous, section member profiles (10) effective to allow the later applied polymeric material (SR) to be gripped thereon; and carrying out said co-moulding, incorporating operation.

2. A method according to Claim 1, wherein said insert (G) has at least one portion adapted for incorporation into the polymeric material of said load bearing structure (SR) and provided with at least one grip profile (10) for said polymeric material (SR).

3. A method according to Claims 1 and 2, wherein said insert (G) has at least one portion adapted to remain exposed to the outside against which the closure of the polymeric structure (SR) mould makes a seal.

4. A method according to the preceding claims, wherein said load bearing structure (SR) is injection moulded.

5. A method according to the preceding claims, wherein said load bearing structure (SR) is moulded from an optionally filled thermoplastic resin.

6. A method according to Claim 1, characterized in that it also comprises a further intermediate step of surface treating said rubber insert (G) with a primer and/or adhesive effective to establish a chemical and physical bond between said insert rubber and structure resin during the moulding step of the latter.

7. A method according to Claim 6, wherein said primer and/or adhesive are compatible both with the rubber and resin polymers.

8. A product manufactured according to the method of Claims 1 to 5, characterized in that it comprises a polymeric material structure (SR) having a port filled by a glass pane (K), wherein the glass pane holding and mounting frame border surrounding said port incorporates a rubber insert (G) adhesion bonded to a corresponding peripheral portion of said glass pane (K), and wherein the rubber of said bonded insert (G) is provided with grip profiles (10) whereinto, during the moulding step, the structure resin spreads to co-penetrate said profiles in mutual interlocking relationship.

9. A product according to Claim 8, characterized in that it comprises an adhesive layer interposed between said insert rubber and structure resin incorporating it.

10. A product according to Claims 8 and 9, characterized in that it embodies a motor vehicle door member having a port filled by a fixed glass pane.

**Patentansprüche**

1. Verfahren zum innigen Verbinden und Abdichten einer Glasscheibe (K), die mit einer an der Außenfläche befindlichen Gummieinlage (G) versehen ist, mit einer Struktur (SR) aus einem formbaren Polymermaterial durch wenigstens teilweises Einarbeiten der Einlage (G) durch Co-Formen in den Rahmen der lasttragenden Struktur aus dem Polymermaterial (SR), wobei die Struktur (SR) in eine Form (ST) geformt wird, begrenzt wenigstens auf die Kontur der Einlage (G), die zur Einarbeitung in das Polymermaterial beabsichtigt ist, dadurch gekennzeichnet, daß es in Folge die folgenden Verfahrensstufen umfaßt:

Adhäsionsverbinden der an der Außenfläche befindlichen Gummieinlage (G) mit der Glasscheibe (K) durch chemisch-molekulare Adhäsion während der Formbildungskonformationsstufe des Gummis;

Vorsehen eines oder mehrerer kontinuierlicher oder nichtkontinuierlicher Abschnittsteilprofile (10), die wirksam sind, um das später aufgebrachte Polymermaterial (SR) darauf zu halten, auf der adhäsionsgebundenen Einlage (G) während der Formkonformationsstufe und Durchführen des Co-Formens.

2. Verfahren nach Anspruch 1, worin die Einlage (G) wenigstens ein Teil, das zur Einarbeitung in das Polymermaterial der lasttragenden Stuktur (SR) angepaßt ist und mit wenigstens einem Griffprofil (10) für das Polymermaterial (SR) versehen ist, besitzt.

3. Verfahren nach Anspruch 1 und 2, worin die Einlage (G) wenigstens ein Teil, das so angepaßt ist, daß es auf der Außenseite, gegen die Verschluß der Polymerstrukturform (SR) abdichtet, herausragt, besitzt.

4. Verfahren nach einem der vorhergehenden Ansprüche, worin die lasttragende Struktur (SR) spritzgeformt wird.

5. Verfahren nach einem der vorhergehenden Ansprüche, worin die lasttragende Struktur (SR) aus einem gegebenenfalls gefüllten thermoplastischen Harz geformt wird.

6. Verfahren nach Anspruch 1, dadurch gekennzeichnet, daß es ebenfalls eine weitere Zwischenstufe der Oberflächenbehandlung der Gummieinlage (G) mit einem Primer und/oder einem Klebstoff, der wirksam ist, um eine chemische und physikalische Bindung zwischen dem Einlagengummi und dem Strukturharz während der Formstufe des letzteren zu bewirken, umfaßt.

7. Verfahren nach Anspruch 6, worin der Primer und/oder der Klebstoff sowohl mit dem Gummi als auch den Harzpolymeren verträglich ist.

8. Produkt, hergestellt nach dem Verfahren der Ansprüche 1 bis 5, dadurch gekennzeichnet, daß es eine Struktur (SR) aus einem Polymermatierial mit einer Öffnung gefüllt mit einer Glasscheibe (K) umfaßt, worin der Glasscheibenhalte- und befestigungsrahmenrand, der die Öffnung umgibt, eine Gummieinlage (G) einschließt, die an einen entsprechenden Teil der Außenoberfläche der Glasscheibe (K) adhäsionsgebunden ist und worin das Gummi der gebundenen Einlage (G) Griffprofilen (10) versehen ist, worin sich während der Formstufe das Strukturharz ausbreitet, um in die Profile in gegenseitiger zusammenhaltender Beziehung einzudringen.

9. Produkt nach Anspruch 8, dadurch gekennzeichnet, daß es eine Klebstoffschicht, angeordnet zwischen dem Einlagengummi und dem damit verbundenen Strukturharz, umfaßt.

10. Produkt nach Anspruch 8 und 9, dadurch gekennzeichnet, daß es ein Türteil eines Kraftfahrzeugs mit einer Öffnung, gefüllt mit einer befestigten Glasscheibe, verkörpert.

**Revendications**

1. Procédé de liaison étroite et d'étanchéité d'un panneau de verre (K) muni d'un insert de caoutchouc périphérique (G), avec une structure en matériau polymère (SR) susceptible d'être moulée en incorporant par moulage simultané et au moins partiellement l'insert (G) au cadre de la structure (SR) de matériau polymère supportant les contraintes, ladite structure (SR) étant moulée dans un moule (ST) limité au moins au contour de l'insert (G) destiné à l'incorporation du matériau polymère, caractérisé en ce qu'il comprend successivement les étapes opératoires suivantes:

—collage de l'insert (G) de caoutchouc périphérique avec le panneau de verre (K) par adhésion moléculaire chimique au cours de l'étape de conformation dimensionnelle du caoutchouc par moulage;

—création sur ledit insert (G) collé, au cours de l'étape de conformation dimensionnelle de celui-ci, d'un ou de plusieurs éléments profilés (10), continus ou discontinus, dont la fonction est de permettre au matériau polymère (SR) appliqué ultérieurement de s'accrocher sur celui-ci; et

—exécution de ladite opération d'incorporation par moulage simultané.

2. Procédé selon la revendication 1, dans lequel ledit insert (G) comporte au moins une partie apte à être incorporée dans le matériau polymère de ladite structure supportant les contraintes (SR) et munie d'au moins un profil pour l'accrochage (10) sur ledit matériau polymère (SR).

3. Procédé selon les revendications 1 et 2, dans lequel ledit insert (G) présente au moins une partie apte à rester exposée vers l'extérieur, contre laquelle la partie de recouvrement de la structure polymère moulée (SR) forme un joint d'étanchéité.

4. Procédé selon les revendications précédentes, dans lequel ladite structure (SR) supportant les contraintes est moulée par injection.

5. Procédé selon les revendications précédentes dans lequel ladite structure (SR) supportant les contraintes est moulée en une résine thermoplastique chargée comme on le souhaite.

6. Procédé selon la revendication 1, caractérisé en ce qu'il comprend également une autre opération intermédiaire de traitement de surface dudit insert (G) en caoutchouc au moyen d'un primaire et/ou d'un adhésif dont la fonction est de créer un collage chimique et physique entre ledit caoutchouc d'insert et la résine de la structure, pendant l'opération de moulage de cette dernière.

7. Procédé selon la revendication 6, dans lequel ledit primaire et/ou ledit adhésif sont compatibles à la fois avec la caoutchouc et avec les résines polymères.

8. Produit manufacturé selon le procédé des revendications 1 à 5, caractérisé en ce qu'il comprend une structure (SR) de matériau polymère comportant une ouverture remplie par un panneau de verre (K), dans lequel le bord de cadre servant à maintenir et à monter le panneau de verre entourant ladite ouverture, incorpore un insert (G) de caoutchouc collé sur une partie périphérique correspondante dudit panneau de verre (K) et dans lequel le caoutchouc dudit insert collé (G) est muni de profiles d'accrochage (10) dans lesquels, au cours de l'opération de moulage, la résine de la structure se répand en vue de pénétrer dans lesdits profils en créant une relation réciproque de blocage.

9. Produit selon la revendication 8, caractérisé en ce qu'il comprend une couche adhésive interposée entre ledit caoutchouc de l'insert et la résine de la structure dans laquelle celui-ci est incorporé.

10. Produit selon les revendications 8 et 9, caractérisé en ce qu'il se présente sous forme d'un élément de portière de véhicule automobile comportant une ouverture remplie par un panneau de verre fixe.

## Fig. 1

## Fig. 3

1

# EP 0 122 545 B1

Fig. 2

Fig. 2a

Fig. 2b

Fig. 2c

Fig. 2d

Fig. 2e

2